# EUROPEAN PATENT APPLICATION

(11) **EP 3 629 189 A2**
(43) Date of publication of application: **01.04.2020**
(21) Application number: 19193575.8
(22) Date of filing: 26.08.2019
(51) Int. Cl.: G06F 15/173

(54) **TECHNOLOGIES FOR USING A HARDWARE QUEUE MANAGER AS A VIRTUAL GUEST TO HOST NETWORKING INTERFACE**

(30) Priority: 27.09.2018 US 201816144146
(71) Applicant: Intel Corporation, Santa Clara, CA 95054 (US)
(72) Inventor: MANGAN, John, Shannon, V14 AN23 (IE); MCDONNELL, Niall D., Limerick, V94 TK5W (IE); VAN HAAREN, Harry, Limerick, V94 WA09 (IE); RICHARDSON, Bruce, Shannon, V14 P898 (IE); LOFTUS, Ciara, Galway, H54 NT28 (IE)
(74) Representative: Rummler, Felix

(57) **Abstract**

Technologies for using a hardware queue manager as a virtual guest to host networking interface include a compute node configured to receive a pointer corresponding to each of one or more available receive buffers from a guest processor core of at least one processor of the compute node that has been allocated to a virtual guest managed by the compute node. The compute node is further configured to enqueue the received pointer of each of the one or more available receive buffers into an available buffer queue and facilitate access to the available receive buffers to at least a portion of a plurality of virtual switch processor cores. Each of the virtual switch processor cores comprises another processor core of the plurality of processor cores that has been allocated to a virtual switch of the compute node. Other embodiments are described herein.

## Description

### BACKGROUND

Modern computing devices have become ubiquitous tools for personal, business, and social uses. As such, many modern computing devices are capable of connecting to various data networks, including the Internet, to transmit and receive data communications over the various data networks at varying rates of speed. To facilitate communications between computing devices, the data networks typically include one or more network computing devices (e.g., compute servers, storage servers, etc.) to route communications (e.g., via switches, routers, etc.) that enter/exit a network (e.g., north-south network traffic) and between network computing devices in the network (e.g., east-west network traffic). In present packet-switched network architectures, data is transmitted in the form of network packets between networked computing devices. At a high level, data is packetized into a network packet at one computing device and the resulting packet transmitted, via a transmission device (e.g., a network interface controller (NIC) of the computing device), to another computing device over a network.

Upon receipt of a network packet, the computing device typically performs one or more processing operations on the network packet. Such processing is often compute intensive and/or latency sensitive. Accordingly, such computing devices typically include processors with multiple cores (e.g., processing units that each read and execute instructions, such as in separate threads) which operate on data (e.g., using one or more queues). It should be understood that communication between cores in such multi-core processors is an important parameter in many computer applications such as packet processing, high-performance computing, and machine learning. On a general-purpose platform, shared memory space managed by software is often employed to realize inter-core communication. As the number of processor cores increases, communication between the cores may become a limiting factor for performance scaling in certain scenarios. Present technologies for realizing inter-core communication, such as those that employ standard para-virtualized network interfaces, typically rely on single producer/single consumer shared memory rings, which can generate a large amount of individual queue polling and challenges for load balancing, prioritizing flows, and maintaining packet ordering, in addition to the overhead associated with of head/tail pointers.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified diagram of at least one embodiment of a compute node for using a hardware queue manager as a virtual guest to host networking interface;
FIG. 2 is a simplified block diagram of at least one embodiment of an environment that may be established by the compute node of FIG. 1;
FIG. 3 is a simplified flow diagram of at least one embodiment of a method for initializing a guest processor core that may be performed by the compute device of FIG. 1;
FIG. 4 is a simplified flow diagram of at least one embodiment of a method for using a hardware queue manager as a virtual guest to host networking interface on ingress that may be performed by the compute device of FIG. 1;
FIG. 5 is a simplified communication flow block diagram of at least one embodiment of an illustrative hardware queue manager as a virtual guest to host networking interface on ingress that may be performed by the compute device of FIG. 1;
FIG. 6 is a simplified flow diagram of at least one embodiment of a method for using a hardware queue manager as a virtual guest to host networking interface on egress that may be performed by the compute device of FIG. 1; and
FIG. 7 is a simplified communication flow block diagram of at least one embodiment of an illustrative hardware queue manager as a virtual guest to host networking interface on egress that may be performed by the compute device of FIG. 1.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

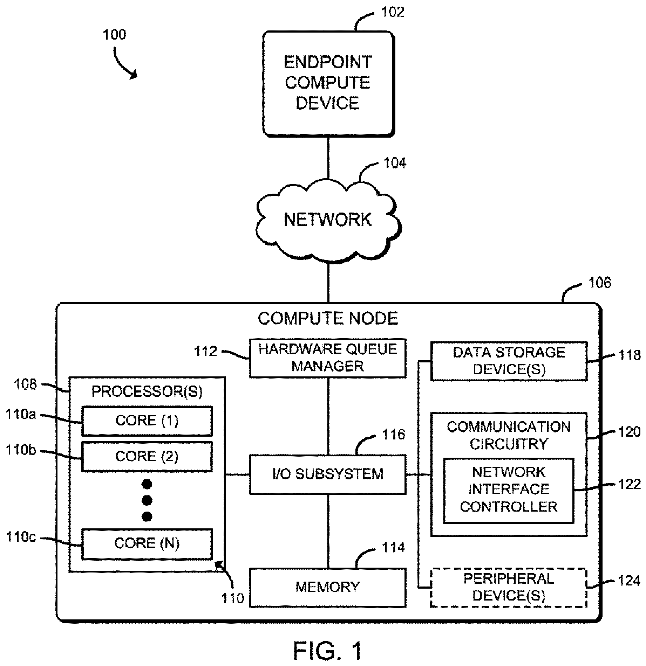

Referring now to FIG. 1, a compute node 106 for using a hardware queue manager (see, e.g., the hardware queue manager 112) as a virtual guest to host networking interface includes an endpoint compute device 102 communicatively coupled to a compute node 106 via a network 104. While illustratively shown as having a single endpoint compute device 102 and a single compute node 106, the system 100 may include multiple endpoint compute devices 102 and multiple compute nodes 106, in other embodiments. It should be appreciated that the endpoint compute device 102 and the compute node 106 have been illustratively described herein, respectively, as being one of a "source" of network traffic (i.e., the endpoint compute device 102) and a "destination" of the network traffic (i.e., the compute node 106) for the purposes of providing clarity to the description. It should be further appreciated that, in some embodiments, the endpoint compute device 102 and the compute node 106 may reside in the same data center or high-performance computing (HPC) environment. In other words, the endpoint compute device 102 and compute node 106 may reside in the same network 104 connected via one or more wired and/or wireless interconnects.

In use, the compute node 106 includes a hardware queue manager 112 that provides queue management offload and load balancing services. To do so, the hardware queue manager 112 is designed to allow multiple threads to insert entries into (e.g., multiple producer), or pull entries from (e.g., multiple consumer), ordered queues in an efficient manner without requiring locks or atomic semantics. For example, an instruction of a software program may be executed by a processor core, which may instruct that processor core to enqueue data to a queue of the hardware queue manager 112. As such, by using a hardware based queue manager, enqueue and dequeue operations may be performed faster and compute cycles on processor cores can be freed. For example, be using the hardware queue manager 112 as the underlying interface between the guest and host, the shared memory rings commonly used in present technologies can be replaced.

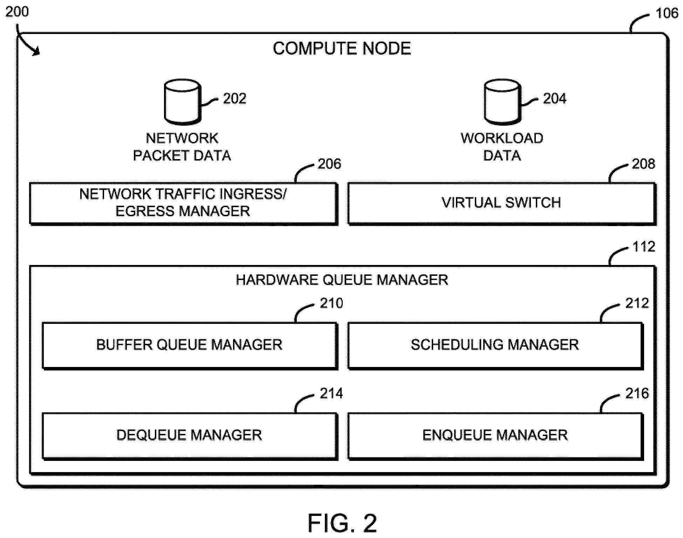

It should be understood that the networking use case as described herein employs a software-based virtual switch (see, e.g., the virtual switch 208 of FIG. 2) running on multiple processor cores of the compute node 106 to link multiple virtualized applications, each of which can also run on multiple processor cores. The hardware queue manager 112 is configured to link the virtual switch allocated processor cores and the virtualized application that is designed for such multi-producer/multi-consumer use-case scenarios. Accordingly, as the use case is based on a host-based software virtual switch, it should be understood that the majority of host processor core cycles can be used in support of virtual switch operations and not "wasted" on the network interface itself. The virtualized application may be embodied as any type of software program for which enqueuing and/or dequeuing is useful. In an illustrative embodiment, the software program may include virtualized network functions, and the enqueuing and dequeuing may allow for fast transfer and processing of packets of network communication, wherein different processor cores have been allocated to perform different virtualized network functions.

As shown in FIG. 1, the illustrative compute node 106 includes one or more processors 108, memory 114, an I/O subsystem 116, one or more data storage devices 118, communication circuitry 120, and, in some embodiments, one or more peripheral devices 124. It should be appreciated that the compute node 106 may include other or additional components, such as those commonly found in a typical computing device (e.g., various input/output devices and/or other components), in other embodiments. Additionally, in some embodiments, one or more of the illustrative components may be incorporated in, or otherwise form a portion of, another component.

The processor(s) 108 may be embodied as any type of device or collection of devices capable of performing the various compute functions as described herein. In some embodiments, the processor(s) 108 may be embodied as one or more multi-core processors, digital signal processors (DSPs), microcontrollers, or other processor(s) or processing/controlling circuit(s). In some embodiments, the processor(s) 108 may be embodied as, include, or otherwise be coupled to an integrated circuit, an embedded system, a field-programmable-array (FPGA), a system-on-a-chip (SOC), an application specific integrated circuit (ASIC), reconfigurable hardware or hardware circuitry, or other specialized hardware to facilitate performance of the functions described herein.

The illustrative processor(s) 108 includes multiple processor cores 110 (e.g., two processor cores, four processor cores, eight processor cores, sixteen processor cores, etc.). The illustrative processor cores include a first processor core 110 designated as core (1) 110a, a second processor core 110 designated as core (2) 110b, and a third processor core 110 designated as core (N) 110c (e.g., wherein the core (N) 110c is the "Nth" processor core 110 and "N" is a positive integer). Each of processor cores 110 may be embodied as an independent logical execution unit capable of executing programmed instructions. It should be appreciated that, in some embodiments, the compute node 106 (e.g., in supercomputer embodiments) may include thousands of processor cores. Each of the processor(s) 108 may be connected to a physical connector, or socket, on a motherboard (not shown) of the compute node 106 that is configured to accept a single physical processor package (i.e., a multi-core physical integrated circuit). It should be appreciated that, while not illustratively shown, each the processor cores 110 may be communicatively coupled to at least a portion of a cache memory and functional units usable to independently execute programs, operations, threads, etc.

The hardware queue manager 112 may be embodied as any type of software, firmware, hardware, circuit, device, or collection thereof, capable of performing the functions described herein, including providing queue management offload and load balancing services. More particularly, the hardware queue manager 112 may be embodied as any device or circuitry capable of managing the enqueueing of queue elements from producer threads and assigning the queue elements to worker threads and consumer threads of a workload for operation on the data associated with each queue element. Accordingly, in operation, as described in further detail below (see, e.g., the environment 200 of FIG. 2), the hardware queue manager 112 may include any devices, controllers, or the like that are configured to manage buffer operations, scheduling operations, enqueue/dequeuer operations, credit management operations, etc., in order to perform the operations described herein as being performed by the hardware queue manager 112.

The memory 114 may be embodied as any type of volatile or non-volatile memory or data storage capable of performing the functions described herein. In operation, the memory 114 may store various data and software used during operation of the compute node 106, such as operating systems, applications, programs, libraries, and drivers. It should be appreciated that the memory 114 may be referred to as main memory (i.e., a primary memory). Volatile memory may be a storage medium that requires power to maintain the state of data stored by the medium. Non-limiting examples of volatile memory may include various types of random access memory (RAM), such as dynamic random access memory (DRAM) or static random access memory (SRAM).

One particular type of DRAM that may be used in a memory module is synchronous dynamic random access memory (SDRAM). In particular embodiments, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at www.jedec.org). Such standards (and similar standards) may be referred to as DDR-based standards and communication interfaces of the storage devices that implement such standards may be referred to as DDR-based interfaces.

In one embodiment, the memory 114 is a block addressable memory device, such as those based on NAND or NOR technologies. A memory device may also include a three dimensional crosspoint memory device (e.g., Intel 3D XPoint™ memory), or other byte addressable write-in-place nonvolatile memory devices. In one embodiment, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product.

In some embodiments, 3D crosspoint memory (e.g., Intel 3D XPoint™ memory) may comprise a transistor-less stackable cross point architecture in which memory cells sit at the intersection of word lines and bit lines and are individually addressable and in which bit storage is based on a change in bulk resistance. In some embodiments, all or a portion of the memory 114 may be integrated into the processor 114. In operation, the memory 114 may store various software and data used during operation such as workload data, hardware queue manager data, migration condition data, applications, programs, libraries, and drivers.

Each of the processor(s) 108 and the memory 114 are communicatively coupled to other components of the compute node 106 via the I/O subsystem 116, which may be embodied as circuitry and/or components to facilitate input/output operations with the processor(s) 108, the memory 114, and other components of the compute node 106. For example, the I/O subsystem 116 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 116 may form a portion of a SoC and be incorporated, along with one or more of the processors 108, the memory 114, and other components of the compute node 106, on a single integrated circuit chip.

The one or more data storage devices 118 may be embodied as any type of storage device(s) configured for short-term or long-term storage of data, such as, for example, memory devices and circuits, memory cards, hard disk drives, solid-state drives, or other data storage devices. Each data storage device 118 may include a system partition that stores data and firmware code for the data storage device 118. Each data storage device 118 may also include an operating system partition that stores data files and executables for an operating system.

The communication circuitry 120 may be embodied as any communication circuit, device, or collection thereof, capable of enabling communications between the compute node 106 and other computing devices, such as the endpoint compute device 102, as well as any network communication enabling devices, such as an access point, switch, router, etc., to allow communication over the network 104. Accordingly, the communication circuitry 120 may be configured to use any one or more communication technologies (e.g., wireless or wired communication technologies) and associated protocols (e.g., Ethernet, Bluetooth®, Wi-Fi®, WiMAX, LTE, 5G, etc.) to effect such communication.

It should be appreciated that, in some embodiments, the communication circuitry 120 may include specialized circuitry, hardware, or combination thereof to perform pipeline logic (e.g., hardware algorithms) for performing the functions described herein, including processing network packets (e.g., parse received network packets, determine destination computing devices for each received network packets, forward the network packets to a particular buffer queue of a respective host buffer of the compute node 106, etc.), performing computational functions, etc.

In some embodiments, performance of one or more of the functions of communication circuitry 120 as described herein may be performed by specialized circuitry, hardware, or combination thereof of the communication circuitry 120, which may be embodied as a SoC or otherwise form a portion of a SoC of the compute node 106 (e.g., incorporated on a single integrated circuit chip along with one of the processor(s) 108, the memory 114, and/or other components of the compute node 106). Alternatively, in some embodiments, the specialized circuitry, hardware, or combination thereof may be embodied as one or more discrete processing units of the compute node 106, each of which may be capable of performing one or more of the functions described herein.

The illustrative communication circuitry 120 includes the NIC 122, which may be embodied as one or more add-in-boards, daughtercards, network interface cards, controller chips, chipsets, or other devices that may be used by the compute node 106 to connect with another compute device (e.g., the endpoint compute device 102). In some embodiments, the NIC 122 may be embodied as part of a SoC that includes one or more processors, or included on a multichip package that also contains one or more processors. In some embodiments, the NIC 122 may include a local processor (not shown) and/or a local memory (not shown) that are both local to the NIC 122. In such embodiments, the local processor of the NIC 122 may be capable of performing one or more of the functions of a processor 108 described herein. Additionally or alternatively, in such embodiments, the local memory of the NIC 122 may be integrated into one or more components of the compute node 106 at the board level, socket level, chip level, and/or other levels.

The one or more peripheral devices 124 may include any type of device that is usable to input information into the compute node 106 and/or receive information from the compute node 106. The peripheral devices 124 may be embodied as any auxiliary device usable to input information into the compute node 106, such as a keyboard, a mouse, a microphone, a barcode reader, an image scanner, etc., or output information from the compute node 106, such as a display, a speaker, graphics circuitry, a printer, a projector, etc. It should be appreciated that, in some embodiments, one or more of the peripheral devices 124 may function as both an input device and an output device (e.g., a touchscreen display, a digitizer on top of a display screen, etc.). It should be further appreciated that the types of peripheral devices 124 connected to the compute node 106 may depend on, for example, the type and/or intended use of the compute node 106. Additionally or alternatively, in some embodiments, the peripheral devices 124 may include one or more ports, such as a USB port, for example, for connecting external peripheral devices to the compute node 106.

The endpoint compute device 102 may be embodied as any type of computation or computer device capable of performing the functions described herein, including, without limitation, a smartphone, a mobile computing device, a tablet computer, a laptop computer, a notebook computer, a computer, a server (e.g., stand-alone, rack-mounted, blade, etc.), a sled (e.g., a compute sled, an accelerator sled, a storage sled, a memory sled, etc.), a network appliance (e.g., physical or virtual), a web appliance, a distributed computing system, a processor-based system, and/or a multiprocessor system. While not illustratively shown, it should be appreciated that endpoint compute device 102 includes similar and/or like components to those of the illustrative compute node 106. As such, figures and descriptions of the like components are not repeated herein for clarity of the description with the understanding that the description of the corresponding components provided above in regard to the compute node 106 applies equally to the corresponding components of the endpoint compute device 102. Of course, it should be appreciated that the computing devices may include additional and/or alternative components, depending on the embodiment.

The network 104 may be embodied as any type of wired or wireless communication network, including but not limited to a wireless local area network (WLAN), a wireless personal area network (WPAN), an edge network (e.g., a multi-access edge computing (MEC) network), a fog network, a cellular network (e.g., Global System for Mobile Communications (GSM), Long-Term Evolution (LTE), 5G, etc.), a telephony network, a digital subscriber line (DSL) network, a cable network, a local area network (LAN), a wide area network (WAN), a global network (e.g., the Internet), or any combination thereof. It should be appreciated that, in such embodiments, the network 104 may serve as a centralized network and, in some embodiments, may be communicatively coupled to another network (e.g., the Internet). Accordingly, the network 104 may include a variety of other virtual and/or physical network computing devices (e.g., routers, switches, network hubs, servers, storage devices, compute devices, etc.), as needed to facilitate communication between the compute node 106 and the endpoint compute device 102, which are not shown to preserve clarity of the description.

Referring now to FIG. 2, the compute node 106 may establish an environment 200 during operation. The illustrative environment 200 includes a network traffic ingress/egress manager 206, a virtual switch 208, and the hardware queue manager 112 of FIG. 1. The various components of the environment 200 may be embodied as hardware, firmware, software, or a combination thereof. As such, in some embodiments, one or more of the components of the environment 200 may be embodied as circuitry or a collection of electrical devices (e.g., network traffic ingress/egress management circuitry 206, virtual switch circuitry 208, hardware queue management circuitry 112, etc.). It should be appreciated that, in such embodiments, one or more of the network traffic ingress/egress management circuitry 206, the virtual switch circuitry 208, and the hardware queue management circuitry 112 may form a portion of one or more of the processor(s) 108, the memory 114, the communication circuitry 120, the I/O subsystem 116 and/or other components of the compute node 106.

It should be further appreciated that, in other embodiments, one or more functions described herein as being performed by a particular component of the compute node 106 may be performed, at least in part, by one or more other components of the compute node 106, such as the one or more processors 108, the I/O subsystem 116, the communication circuitry 120, an ASIC, a programmable circuit such as an FPGA, and/or other components of the compute node 106. It should be further appreciated that associated instructions may be stored in the memory 114, the data storage device(s) 118, and/or other data storage location, which may be executed by one of the processors 108 and/or other computational processor of the compute node 106.

Additionally, in some embodiments, one or more of the illustrative components may form a portion of another component and/or one or more of the illustrative components may be independent of one another. Further, in some embodiments, one or more of the components of the environment 200 may be embodied as virtualized hardware components or emulated architecture, which may be established and maintained by the NIC 122, the processor(s) 108, or other components of the compute node 106. It should be appreciated that the compute node 106 may include other components, sub-components, modules, sub-modules, logic, sub-logic, and/or devices commonly found in a computing device, which are not illustrated in FIG. 2 for clarity of the description.

In the illustrative embodiment, the environment 200 includes network packet data 202 and workload data 204, each of which may be accessed by the various components and/or sub-components of the compute node 106. Additionally, it should be appreciated that in some embodiments the data stored in, or otherwise represented by, each of the network packet data 202 and the workload data 204 may not be mutually exclusive relative to each other. For example, in some implementations, data stored in the network packet data 202 may also be stored as a portion of the workload data 204, and/or vice versa. As such, although the various data utilized by the compute node 106 is described herein as particular discrete data, such data may be combined, aggregated, and/or otherwise form portions of a single or multiple data sets, including duplicative copies, in other embodiments.

In an illustrative example, the network packet data 202 may include any portion of a network packet (e.g., one or more fields of a header, a portion of a payload, etc.) or identifying information related thereto (e.g., a storage location, a descriptor, etc.) that has been received from a communicatively coupled compute device or generated for transmission to a communicatively coupled compute device. In another illustrative example, the workload data 204 may include any data indicative of workloads and the threads associated with each workload, input data to be operated on by each workload (e.g., data received from the endpoint compute device 102) and output data produced by each workload (e.g., data to be sent to the endpoint compute device 102).

The network traffic ingress/egress manager 206, which may be embodied as hardware, firmware, software, virtualized hardware, emulated architecture, and/or a combination thereof as discussed above, is configured to receive inbound and route/transmit outbound network traffic. To do so, the network traffic ingress/egress manager 206 is configured to facilitate inbound/outbound network communications (e.g., network traffic, network packets, network flows, etc.) to and from the compute node 106. For example, the network traffic ingress/egress manager 206 is configured to manage (e.g., create, modify, delete, etc.) connections to physical and virtual network ports (i.e., virtual network interfaces) of the compute node 106 (e.g., via the communication circuitry 120), as well as the ingress/egress buffers/queues associated therewith. In some embodiments, information associated with the received network traffic (e.g., an associated descriptor, a pointer to a location in memory in which at least a portion of the received network traffic has been stored, a characteristic of the received network traffic, etc.) and/or network-related information may be stored in the network packet data 202.

The virtual switch 208 may be embodied as any type of virtualized switch capable of managing the internal data transfer of network traffic related information, such as by directing communications from virtualized applications, virtualized network functions (VNFs), virtual machines (VMs), containers, etc., to the NIC 122, and vice versa. It should be appreciated that the virtual switch 208 is configured to intelligently direct such communications, such as by checking at least a portion of a network packet before moving them to a destination, providing a layer of security, etc., rather than merely forwarding the network traffic. Additionally, in some embodiments, the virtual switch 208 may be configured to facilitate the communications between VMs, containers, etc.

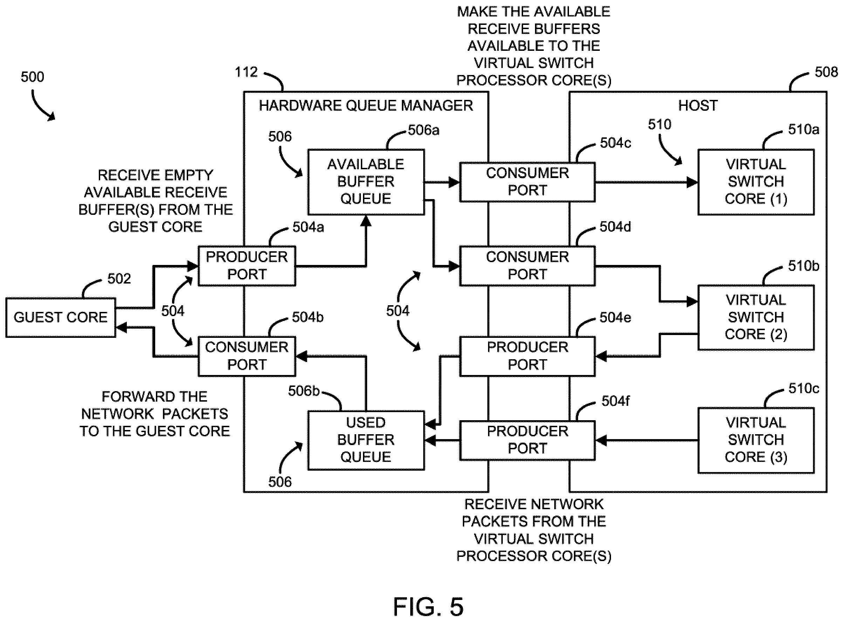

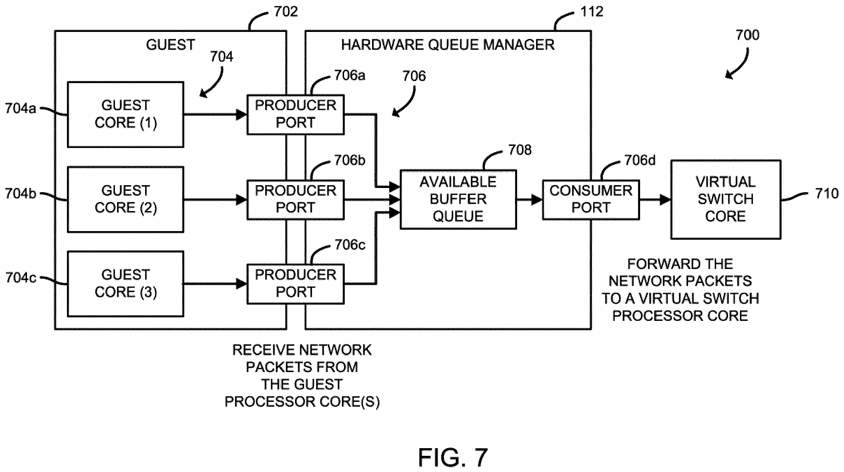

The illustrative hardware queue manager 112 includes a buffer queue manager 210, a scheduling manager 212, a dequeue manager 214, and an enqueue manager 216. The buffer queue manager 210 is configured to manage the buffer queues (see, e.g., the available buffer queue 506a and the used buffer queue 506b of FIG. 5, the available buffer queue 708 of FIG. 7, etc.) associated with the hardware queue manager 112. The scheduling manager 212 is configured to determine the order in which data in the buffers are to be processed, such as may be based on a software configurable scheduling policy employing round robin, weighted round robin, preemptive priority, and/or a combination of those and/or other policies. The dequeue manager 214 is configured to manage dequeue operations (e.g., remove/pop operations) of the buffer queues. To do so, the dequeue manager 214 is configured to dequeue data at a head of an appropriate queue (e.g., as may be indicated by a received dequeue command) and send the data to a destination (e.g., a processor core 110 which sent the dequeue command). The enqueue manager 216 is configured to manage enqueue operations (e.g., insert/push operations) of the buffer queues. To do so, the enqueue manager 216 is configured to receive data to be enqueued and enqueue the received data at a tail of an appropriate queue.

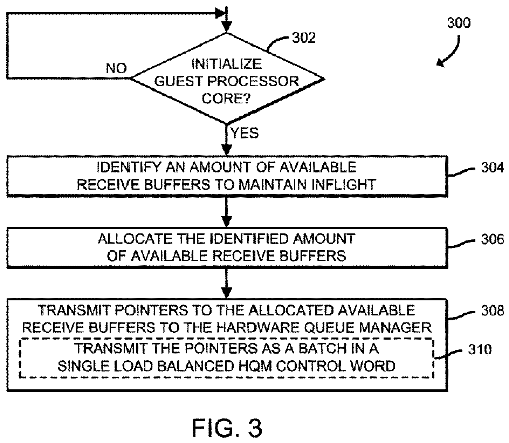

Referring now to FIG. 3, the compute node 106, in operation, may execute a method 300 for initializing a guest processor core (see, e.g., the guest core 502 of FIG. 5 and the guest cores 704 of FIG. 7) that has been allocated to a virtualized guest (e.g., application, VNF, VM, container, etc.). The method 300 begins in block 302, in which the compute node 106 determines whether to initialize a guest processor core. If so, the method 300 advances to block 304, in which the compute node 106 identifies an amount of available receive buffers to maintain inflight at a given time. In block 306, the compute node 106 allocates the identified amount of available receive buffers.

In block 308, the compute node 106 transmits a pointer associated with each of the allocated available receive buffers (e.g., a direct pointer to an allocated available receive buffer, a pointer to a descriptor associated with the allocated available receive buffer) to the hardware queue manager (e.g., the hardware queue manager 112 of FIGS. 1 and 2) for distribution to the processor cores that have been allocated to a virtual switch (e.g., the virtual switch 208 of FIG. 2) of the compute node 106. For example, in block 310, the compute node 106 may transmit the pointers to the allocated available receive buffers in batches with each batch referenced by a single load balanced hardware queue manager control word.

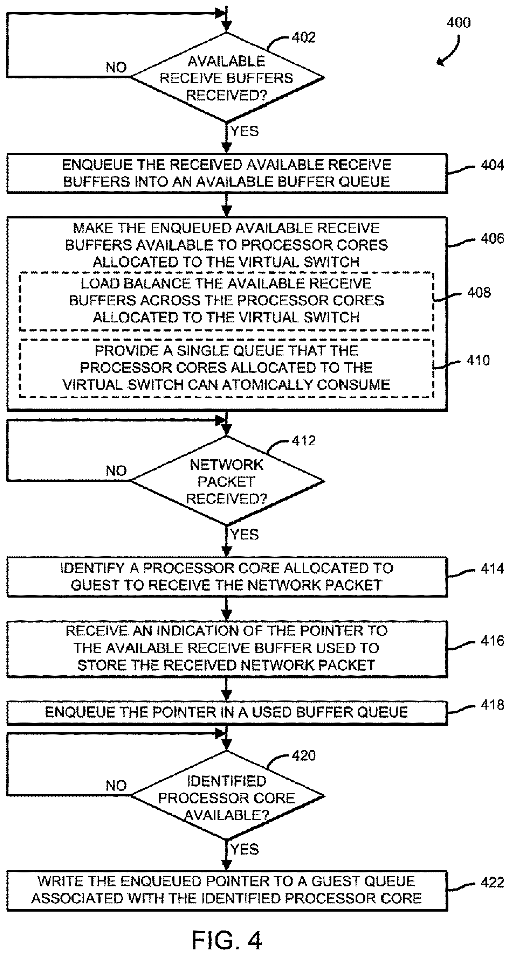

Referring now to FIG. 4, in operation, the compute node 106 may execute a method 400 for using the hardware queue manager as a virtual guest to host networking interface on ingress (i.e., receipt) of a network packet at the compute node 106, or more particularly on ingress of the network packet received at a NIC (e.g., the NIC 122 of FIG. 1) of the compute node 106. The method 400 begins in block 402, in which the compute node 106, or more particularly a hardware queue manager (e.g., the hardware queue manager 112 of FIGS. 1 and 2) of the compute node 106, determines whether a batch of available receive buffers have been received from a guest processor core (e.g., as a result of the method 300 of FIG. 3 having previously been executed). If so, the method 400 advances to block 404, in which the hardware queue manager 112 enqueues the received available receive buffers into an available buffer queue.

In block 406, the hardware queue manager 112 makes the enqueued available receive buffers available to one or more processor cores (e.g., one or more of the processor cores 110 of FIG. 1) allocated to, or otherwise designated to perform operations associated with, a virtual switch (e.g., the virtual switch 208 of FIG. 2). To do so, for example, in block 408, the hardware queue manager 112 may load balance the available receive buffers across the processor cores that have been allocated to the virtual switch 208. Alternatively, in block 410, the hardware queue manager 112 may provide a single queue that the processor cores allocated to the virtual switch can atomically consume.

In block 412, the hardware queue manager 112 determines whether a network packet has been received from a processor core allocated to the virtual switch 208 (e.g., that received the network packet from the NIC 122). In block 414, the hardware queue manager 112 identifies a processor core that has been allocated to, or is otherwise configured to perform operations associated with a virtual guest (e.g., application, VNF, VM, container, etc.) that is to receive the network packet.

As described previously, the processor cores allocated to the virtual switch 208 (i.e., virtual switching cores) can read the enqueued available receive buffers associated with the received network packet. As also described previously, the virtual switching cores are configured to switch the received network packet (e.g., based on the destination address to which it should be sent), pull the available receive buffer(s) owned by that destination guest (which is obtained as described above), and copy the received network packet into the pulled available receive buffer(s). As such, the receive buffer(s) are now "used" buffers and can be sent back into hardware queue manager 112 for the used buffer queue. As such, in block 416 the hardware queue manager 112 receives an indication that identifies or otherwise determines which available receive buffer(s) were pulled to store the received network packet. In block 418, the hardware queue manager 112 enqueues a pointer to the available receive buffer in a used buffer queue.

It should be appreciated that the pointer to the available receive buffer may be a direct pointer to a data buffer in which the network packet has been stored or a pointer to a descriptor associated with the network packet that includes an address to the data buffer in which the network packet has been stored. It should be further appreciated that, irrespective of the pointer type, the pointer points to memory shared between the host and the guest. In block 420, the hardware queue manager 112 determines whether the identified processor core associated with the virtual guest has become available (e.g., based on a polling operation). If so, the method 400 advances to block 422, in which the hardware queue manager 112 writes the enqueued pointer to a guest queue associated with the identified processor core.

Referring now to FIG. 5, an illustrative communication flow block diagram 500 of a hardware queue manager (e.g., the hardware queue manager 112 of FIG. 1) functioning as a virtual guest to host networking interface on ingress as described above in the method 400 of FIG. 4. As illustratively shown, a guest core 502 (e.g., one of the processor cores 110 of FIG. 1 allocated to a guest application, VNF, VM, container, etc.) provides one or more empty available receive buffers to the hardware queue manager 112 for distribution to the virtual switch (e.g., the virtual switch 208 of FIG. 2), or more particularly to one or more of the processor cores 510 allocated to the virtual switch. As described previously, one or more processor cores (e.g., one of the processor cores 110 of FIG. 1) may be allocated to a guest application, VNF, VM, container, etc., which are referred to herein as a guest core and illustratively shown as the guest core 502. It should be appreciated that the guest core 502 has ownership over the empty available receive buffer(s) provided to the hardware queue manager 112.

The hardware queue manager 112 receives the empty available receive buffer(s) via a communicatively coupling port 504 designated as producer port 504a. Upon receipt of the empty available receive buffer(s), the hardware queue manager 112 enqueues the received available receive buffers into a queue 506 managed by the hardware queue manager 112, illustratively designated as an available buffer queue 506a. In an illustrative example, the guest core 502 may supply multiple empty available receive buffers in a batch. It should be appreciated that the guest core 502 may maintain up to some maximum number of available receive buffers inflight. For example, each batch of available receive buffers may sent to the hardware queue manager 112 as a single load-balanced (LB) hardware queue manager control word.

As illustratively shown, the host 508, or host platform, includes multiple virtual switch processor cores 510. As described previously, one or more processor cores (e.g., one of the processor cores 110 of FIG. 1) may be allocated to the virtual switch, which are referred to herein as a virtual switch processor core and illustratively shown as virtual switch processor cores 510. The illustrative virtual switch processor cores 510 includes a first virtual switch processor core 510 designated as virtual switch processor core (1) 510a, a second virtual switch processor core 510 designated as virtual switch processor core (2) 510b, and a third virtual switch processor core 510 designated as virtual switch processor core (3) 510c.

From the available buffer queue 506a, the hardware queue manager 112 makes the enqueued available receive buffers available to one or more virtual switch processor cores 510 via a respective port 504 designated as a consumer port. It should be appreciated that the hardware queue manager 112 is configured to make the enqueued available receive buffers available to those virtual switch processing cores 510 that can send traffic to the guest core 502. As illustratively shown the consumer ports include a first consumer port 504c and a second consumer port 504d. The consumer port 504c is communicatively coupled to the virtual switch processing core (1) 510a and the consumer port 504d is communicatively coupled to the virtual switch processing core (2) 510b. It should be appreciated that multiple virtual switch processor cores 510 can consume the enqueued empty available receive buffers, if available for consumption. Furthermore, it should also be appreciated that some of the virtual switch processing cores 510 to which the available receive buffers have been made available may never use these available receive buffers, in which case they are lost. As such, it should be understood that, in some embodiments, the available buffer queue 506a may be limited in size, or "shallow".

Upon receipt of a network packet, a virtual switch processor core 510 (e.g., the virtual switch processor core (2) 510b or the virtual switch processor core (3) 510c) forwards the received network packets to the hardware queue manager 112 for processing by the guest core 502. As illustratively shown, the hardware queue manager 112 receives the network packets, or more particularly a pointer to the available receive buffer in which the received network packet has been stored, (e.g., via the producer ports 504e and 504f) and enqueues the pointer in another queue 506 managed by the hardware queue manager 112, illustratively designated as a used buffer queue 506b. As such, the hardware queue manager 112 can forward the network packets to the guest core 502 for consumption (e.g., via the consumer port 504b).

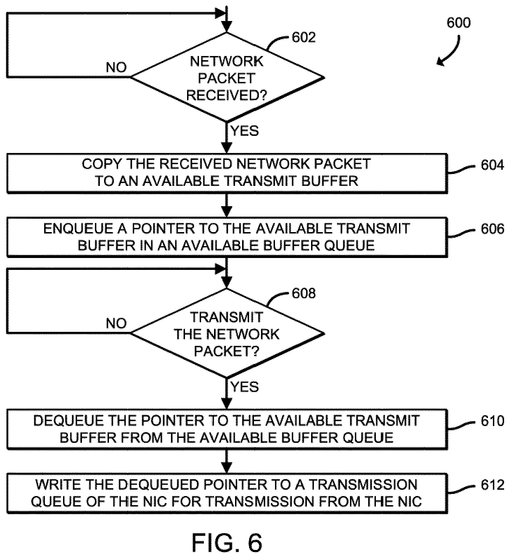

Referring now to FIG. 6, in operation, the compute node 106 may execute a method 600 for using the hardware queue manager as a virtual guest to host networking interface on egress (i.e., transmission) of a network packet from the compute node 106, or more particularly egress of a network packet received from a virtual guest (e.g., application, VNF, VM, container, etc.) for transmission via a NIC (e.g., the NIC 122 of FIG. 1) of the compute node 106. The method 600 begins in block 602, in which the compute node 106, or more particularly a hardware queue manager (e.g., the hardware queue manager 112 of FIGS. 1 and 2) of the compute node 106, determines whether a network packet has been received. If so, the method 600 advances to block 604, in which the hardware queue manager 112 copies the received network packet to an available transmit buffer.

In block 606, the hardware queue manager 112 enqueues a pointer to the available transmit buffer in an available buffer queue. In block 608, the hardware queue manager 112 determines whether the network packet is to be transmitted (e.g., as may be determined based on a polling request received from the NIC 122 via the virtual switch). If so, the method 600 advances to block 610, in which the hardware queue manager 112 dequeues the pointer to the available transmit buffer from the available buffer queue. In block 612, the hardware queue manager 112 writes the dequeued pointer to a transmission queue of the NIC 122 for transmission from the NIC 122 to a designated destination compute device (e.g., the endpoint compute device 102 of FIG. 1).

Referring now to FIG. 7, an illustrative communication flow block diagram 700 of a hardware queue manager (e.g., the hardware queue manager 112 of FIG. 1) functioning as a virtual guest to host networking interface on egress as described above in the method 600 of FIG. 6. As illustratively shown, the hardware queue manager 112 receives network packets from multiple guest cores 704. The illustrative guest cores 704 include a first guest core 704 designated as guest core (1) 704a, a second guest core 704 designated as guest core (2) 704b, and a third guest core 704 designated as guest core (3) 704c. As also illustratively shown, each of the guest cores 704 is communicatively couple to a respective port 706 of the hardware queue manager 112 designated as a producer port. The illustrative producer ports 706 include the producer port 706a communicatively coupled to the guest core (1) 704a, the producer port 706b communicatively coupled to the guest core (2) 704b, and the producer port 706c communicatively coupled to the guest core (3) 704c.

Upon receipt of a network packet from one of the guest processor cores 704, the hardware queue manager 112 copies the received network packet to an available transmit buffer and enqueues a pointer to the available transmit buffer into a queue managed by the hardware queue manager 112, designated as the available buffer queue 708. Upon a determination that the network packet is to be transmitted, such as in response to a polling request, the hardware queue manager 112 forwards the network packet to a virtual switch processor core 710 via another port 706 of the hardware queue manager 112, designated as a consumer port 706d.

It should be appreciated that, in some embodiments, a credit/token system may be employed by the hardware queue manager 112 that is usable to determine whether each of the guest cores 704 can send a network packet to the hardware queue manager 112 for transmission. Accordingly, in such embodiments, the virtual switch processing core 710 may provide a token or other credit identifying mechanism to indicate that the hardware queue manager 112 can receive another network packet for transmission (e.g., from one or more guest cores 704).

### EXAMPLES

Illustrative examples of the technologies disclosed herein are provided below. An embodiment of the technologies may include any one or more, and any combination of, the examples described below.
Example 1 includes a compute node for using a hardware queue manager as a virtual guest to host networking interface, the compute node comprising hardware queue management circuitry to receive a pointer corresponding to each of one or more available receive buffers from a guest processor core of a plurality of guest processor cores, wherein the guest processor core comprises a processor core of a plurality of processor cores of at least one processor of the compute node that has been allocated to a virtual guest managed by the compute node; enqueue the received pointer of each of the one or more available receive buffers into an available buffer queue; and facilitate access to the available receive buffers to at least a portion of a plurality of virtual switch processor cores, wherein each of the virtual switch processor cores comprises another processor core of the plurality of processor cores that has been allocated to a virtual switch of the compute node.
Example 2 includes the subject matter of Example 1, and wherein the hardware queue management circuitry is further to receive a network packet from a virtual switch processor core of the plurality of virtual switch processor cores; identify a target guest processor core of the plurality of guest processor cores to process the network packet; copy the received network packet to an available receive buffer of the one or more available receive buffers based on a corresponding pointer to the available receive buffer; and enqueue the corresponding pointer to the available receive buffer in a used buffer queue.
Example 3 includes the subject matter of any of Examples 1 and 2, and wherein the hardware queue management circuitry is further to write, in response to a determination that the target guest processor core is available, the enqueued pointer to a guest queue associated with the target guest processor core.
Example 4 includes the subject matter of any of Examples 1-3, and wherein the hardware queue management circuitry is further to receive a network packet from the guest processor core; copy the received network packet to an available transmit buffer of a plurality of available transmit buffers based on a corresponding pointer to the available transmit buffer; and enqueue the corresponding pointer to the available transmit buffer in another available buffer queue.
Example 5 includes the subject matter of any of Examples 1-4, and wherein the hardware queue management circuitry is further to dequeue, in response to a determination that the received network packet is to be transmitted via a network interface controller (NIC) of the compute node to a target compute device, the pointer to the available transmit buffer from the other available buffer queue; and write the dequeued pointer to a transmission queue of the NIC that is usable to fetch the receive network packet.
Example 6 includes the subject matter of any of Examples 1-5, and wherein the virtual guest comprises one of a software application, a virtualized network function (VNF), a virtual machine (VM), or a container.
Example 7 includes the subject matter of any of Examples 1-6, and wherein to facilitate access the available receive buffers available to the at least a portion of the plurality of virtual switch processor cores comprises to load balance the available receive buffers for distributed across the at least a portion of the plurality of virtual switch processor cores.
Example 8 includes the subject matter of any of Examples 1-7, and wherein to facilitate access the available receive buffers available to the at least a portion of the plurality of virtual switch processor cores comprises to allocate a single queue to the virtual switch, and wherein each of the at least a portion of the plurality of virtual switch processor cores can atomically consume the available receive buffers.
Example 9 includes one or more machine-readable storage media comprising a plurality of instructions stored thereon that, in response to being executed, cause a compute node to receive a pointer corresponding to each of one or more available receive buffers from a guest processor core of a plurality of guest processor cores, wherein the guest processor core comprises a processor core of a plurality of processor cores of at least one processor of the compute node that has been allocated to a virtual guest managed by the compute node; enqueue the received pointer of each of the one or more available receive buffers into an available buffer queue; and facilitate access to the available receive buffers to at least a portion of a plurality of virtual switch processor cores, wherein each of the virtual switch processor cores comprises another processor core of the plurality of processor cores that has been allocated to a virtual switch of the compute node.
Example 10 includes the subject matter of Example 9, and wherein the plurality of instructions further cause the compute node to receive a network packet from a virtual switch processor core of the plurality of virtual switch processor cores; identify a target guest processor core of the plurality of guest processor cores to process the network packet; copy the received network packet to an available receive buffer of the one or more available receive buffers based on a corresponding pointer to the available receive buffer; and enqueue the corresponding pointer to the available receive buffer in a used buffer queue.
Example 11 includes the subject matter of any of Examples 9 and 10, and wherein the plurality of instructions further cause the compute node to write, in response to a determination that the target guest processor core is available, the enqueued pointer to a guest queue associated with the target guest processor core.
Example 12 includes the subject matter of any of Examples 9-11, and wherein the plurality of instructions further cause the compute node to receive a network packet from the guest processor core; copy the received network packet to an available transmit buffer of a plurality of available transmit buffers based on a corresponding pointer to the available transmit buffer; and enqueue the corresponding pointer to the available transmit buffer in another available buffer queue.
Example 13 includes the subject matter of any of Examples 9-12, and wherein the plurality of instructions further cause the compute node to dequeue, in response to a determination that the received network packet is to be transmitted via a network interface controller (NIC) of the compute node to a target compute device, the pointer to the available transmit buffer from the other available buffer queue; and write the dequeued pointer to a transmission queue of the NIC that is usable to fetch the receive network packet.
Example 14 includes the subject matter of any of Examples 9-13, and wherein the virtual guest comprises one of a software application, a virtualized network function (VNF), a virtual machine (VM), or a container.
Example 15 includes the subject matter of any of Examples 9-14, and wherein to facilitate access the available receive buffers available to the at least a portion of the plurality of virtual switch processor cores comprises to load balance the available receive buffers for distributed across the at least a portion of the plurality of virtual switch processor cores.
Example 16 includes the subject matter of any of Examples 9-15, and wherein to facilitate access the available receive buffers available to the at least a portion of the plurality of virtual switch processor cores comprises to allocate a single queue to the virtual switch, and wherein each of the at least a portion of the plurality of virtual switch processor cores can atomically consume the available receive buffers.
Example 17 includes a method for using a hardware queue manager as a virtual guest to host networking interface, the method comprising receiving, by a compute node, a pointer corresponding to each of one or more available receive buffers from a guest processor core of a plurality of guest processor cores, wherein the guest processor core comprises a processor core of a plurality of processor cores of at least one processor of the compute node that has been allocated to a virtual guest managed by the compute node; enqueuing, by the compute node, the received pointer of each of the one or more available receive buffers into an available buffer queue; and facilitating, by the compute node, access to the available receive buffers to at least a portion of a plurality of virtual switch processor cores, wherein each of the virtual switch processor cores comprises another processor core of the plurality of processor cores that has been allocated to a virtual switch of the compute node.
Example 18 includes the subject matter of Example 17, and further including receiving, by the compute node, a network packet from a virtual switch processor core of the plurality of virtual switch processor cores; identifying, by the compute node, a target guest processor core of the plurality of guest processor cores to process the network packet; copying, by the compute node, the received network packet to an available receive buffer of the one or more available receive buffers based on a corresponding pointer to the available receive buffer; and enqueuing, by the compute node, the corresponding pointer to the available receive buffer in a used buffer queue.
Example 19 includes the subject matter of any of Examples 17 and 18, and further including writing, by the compute node and in response to a determination that the target guest processor core is available, the enqueued pointer to a guest queue associated with the target guest processor core.
Example 20 includes the subject matter of any of Examples 17-19, and further including receiving, by the compute node, a network packet from the guest processor core; copying, by the compute node, the received network packet to an available transmit buffer of a plurality of available transmit buffers based on a corresponding pointer to the available transmit buffer; and enqueuing, by the compute node, the corresponding pointer to the available transmit buffer in another available buffer queue.
Example 21 includes the subject matter of any of Examples 17-20, and further including dequeuing, by the compute node and in response to a determination that the received network packet is to be transmitted via a network interface controller (NIC) of the compute node to a target compute device, the pointer to the available transmit buffer from the other available buffer queue; and writing, by the compute node, the dequeued pointer to a transmission queue of the NIC that is usable to fetch the receive network packet.
Example 22 includes the subject matter of any of Examples 17-21, and wherein the virtual guest comprises one of a software application, a virtualized network function (VNF), a virtual machine (VM), or a container.
Example 23 includes the subject matter of any of Examples 17-22, and wherein facilitating access the available receive buffers available to the at least a portion of the plurality of virtual switch processor cores comprises load balancing the available receive buffers for distributed across the at least a portion of the plurality of virtual switch processor cores.
Example 24 includes the subject matter of any of Examples 17-23, and wherein facilitating access the available receive buffers available to the at least a portion of the plurality of virtual switch processor cores comprises allocating a single queue to the virtual switch, and wherein each of the at least a portion of the plurality of virtual switch processor cores can atomically consume the available receive buffers.

## Claims

1. A compute node for using a hardware queue manager as a virtual guest to host networking interface, the compute node comprising:
hardware queue management circuitry to:
receive a pointer corresponding to each of one or more available receive buffers from a guest processor core of a plurality of guest processor cores, wherein the guest processor core comprises a processor core of a plurality of processor cores of at least one processor of the compute node that has been allocated to a virtual guest managed by the compute node;
enqueue the received pointer of each of the one or more available receive buffers into an available buffer queue; and
facilitate access to the available receive buffers to at least a portion of a plurality of virtual switch processor cores, wherein each of the virtual switch processor cores comprises another processor core of the plurality of processor cores that has been allocated to a virtual switch of the compute node.

2. The compute node of claim 1, wherein the hardware queue management circuitry is further to:
receive a network packet from a virtual switch processor core of the plurality of virtual switch processor cores;
identify a target guest processor core of the plurality of guest processor cores to process the network packet;
copy the received network packet to an available receive buffer of the one or more available receive buffers based on a corresponding pointer to the available receive buffer;
enqueue the corresponding pointer to the available receive buffer in a used buffer queue; and
write, in response to a determination that the target guest processor core is available, the enqueued pointer to a guest queue associated with the target guest processor core.

3. The compute node of claim 1, wherein the hardware queue management circuitry is further to:
receive a network packet from the guest processor core;
copy the received network packet to an available transmit buffer of a plurality of available transmit buffers based on a corresponding pointer to the available transmit buffer; and
enqueue the corresponding pointer to the available transmit buffer in another available buffer queue.

4. The compute node of claim 3, wherein the hardware queue management circuitry is further to:
dequeue, in response to a determination that the received network packet is to be transmitted via a network interface controller (NIC) of the compute node to a target compute device, the pointer to the available transmit buffer from the other available buffer queue; and
write the dequeued pointer to a transmission queue of the NIC that is usable to fetch the receive network packet.

5. The compute node of claim 1, wherein the virtual guest comprises one of a software application, a virtualized network function (VNF), a virtual machine (VM), or a container.

6. The compute node of claim 1, wherein to facilitate access the available receive buffers available to the at least a portion of the plurality of virtual switch processor cores comprises to load balance the available receive buffers for distributed across the at least a portion of the plurality of virtual switch processor cores.

7. The compute node of claim 1, wherein to facilitate access the available receive buffers available to the at least a portion of the plurality of virtual switch processor cores comprises to allocate a single queue to the virtual switch, and wherein each of the at least a portion of the plurality of virtual switch processor cores can atomically consume the available receive buffers.

8. A method for using a hardware queue manager as a virtual guest to host networking interface, the method comprising:
receiving, by a compute node, a pointer corresponding to each of one or more available receive buffers from a guest processor core of a plurality of guest processor cores, wherein the guest processor core comprises a processor core of a plurality of processor cores of at least one processor of the compute node that has been allocated to a virtual guest managed by the compute node;
enqueuing, by the compute node, the received pointer of each of the one or more available receive buffers into an available buffer queue; and
facilitating, by the compute node, access to the available receive buffers to at least a portion of a plurality of virtual switch processor cores, wherein each of the virtual switch processor cores comprises another processor core of the plurality of processor cores that has been allocated to a virtual switch of the compute node.

9. The method of claim 8, further comprising:
receiving, by the compute node, a network packet from a virtual switch processor core of the plurality of virtual switch processor cores;
identifying, by the compute node, a target guest processor core of the plurality of guest processor cores to process the network packet;
copying, by the compute node, the received network packet to an available receive buffer of the one or more available receive buffers based on a corresponding pointer to the available receive buffer;
enqueuing, by the compute node, the corresponding pointer to the available receive buffer in a used buffer queue; and
writing, by the compute node and in response to a determination that the target guest processor core is available, the enqueued pointer to a guest queue associated with the target guest processor core.

10. The method of claim 8, further comprising:
receiving, by the compute node, a network packet from the guest processor core;
copying, by the compute node, the received network packet to an available transmit buffer of a plurality of available transmit buffers based on a corresponding pointer to the available transmit buffer; and
enqueuing, by the compute node, the corresponding pointer to the available transmit buffer in another available buffer queue.

11. The method of claim 10, further comprising:
dequeuing, by the compute node and in response to a determination that the received network packet is to be transmitted via a network interface controller (NIC) of the compute node to a target compute device, the pointer to the available transmit buffer from the other available buffer queue; and
writing, by the compute node, the dequeued pointer to a transmission queue of the NIC that is usable to fetch the receive network packet.

12. The method of claim 8, wherein facilitating access the available receive buffers available to the at least a portion of the plurality of virtual switch processor cores comprises load balancing the available receive buffers for distributed across the at least a portion of the plurality of virtual switch processor cores.

13. The method of claim 8, wherein facilitating access the available receive buffers available to the at least a portion of the plurality of virtual switch processor cores comprises allocating a single queue to the virtual switch, and wherein each of the at least a portion of the plurality of virtual switch processor cores can atomically consume the available receive buffers.

14. One or more machine-readable storage media comprising a plurality of instructions stored thereon that, when executed, causes a compute node to perform the method of any of claims 8-13.

15. A compute node for using a hardware queue manager as a virtual guest to host networking interface, the compute node comprising means for performing the method of any of claims 8-13.
